# EUROPEAN PATENT APPLICATION

(11) **EP 4 403 052 A1**
(43) Date of publication of application: **24.07.2024**
(21) Application number: 22869029.3
(22) Date of filing: 30.08.2022
(51) Int. Cl.: A24F 40/40, A24F 40/46, A24F 40/90

(54) **AEROSOL GENERATING DEVICE AND SPLIT TYPE AEROSOL GENERATING DEVICE**

(30) Priority: 14.09.2021 CN 202111074686
(71) Applicant: Shenzhen Merit Technology Co., Ltd., Shenzhen, Guangdong 518105 (CN)
(72) Inventor: LIN, Qiaoshi, Shenzhen, Guangdong 518105 (CN); ZHANG, Xingfu, Shenzhen, Guangdong 518105 (CN)
(74) Representative: Herrero & Asociados, S.L.
(86) International application number: PCT/CN2022/115912
(87) International publication number: WO 2023/040657

(57) **Abstract**

An aerosol generating device (1), comprising: a heating body assembly (10) for generating aerosol; a control assembly (20) connected to the heating body assembly (10) and used for controlling power supply of the heating body assembly (10); and a power supply assembly (30) connected to the control assembly (20) so as to supply power to the heating body assembly (10) by means of the control assembly (20), wherein the heating body assembly (10) is detachably connected to the control assembly (20), and the control assembly (20) is detachably connected to the power supply assembly (30), such that the heating body assembly (10), the control assembly (20), and/or the power supply assembly (30) can be replaced conveniently, thereby reducing costs.

## Description

### TECHNICAL FIELD

The present disclosure relates to the field of electronic atomization devices, and in particular to an aerosol generating device and a split-type aerosol generating device.

### BACKGROUND

In the related art, most of low-temperature heating devices configured for generating aerosols have integrated structures, that is, a power supply used by the low-temperature heating device is irreplaceable. In response to service life of the power supply being attenuated or the power supply being damaged, the use of the low-temperature heating device is affected, and entire low-temperature heating device needs to be replaced, so that the use cost is relatively high.

### SUMMARY OF THE DISCLOSURE

The present disclosure at least provides an aerosol generating device and a split-type aerosol generating device.

A first aspect of the present disclosure provides an aerosol generating device. The aerosol generating device includes a heater assembly, a control assembly, and a power supply assembly.

The heater assembly is configured for generating aerosol.

The control assembly is connected to the heater assembly, and configured for controlling supplying power to the heater assembly.

The power supply assembly is connected to the control assembly, and configured for supplying power to the heater assembly through the control assembly.

The heater assembly is detachably connected to the control assembly, and the control assembly is detachably connected to the power supply assembly, so as to facilitate replacement of the heater assembly, the control assembly, and/or the power supply assembly.

In some embodiments, the heater assembly includes a heater and a first interface unit.

The heater is configured for heating the aerosol substrate to generate the aerosol.

The first interface unit is connected to the heater.

In some embodiments, the heater assembly includes a plurality of heaters, and the plurality of heaters are disposed in parallel or in series.

In some embodiments, the control assembly includes a second interface unit, a control circuit, and a third interface unit.

The second interface unit is disposed in couple with the first interface unit, so that the control assembly is connected to the heater assembly.

The control circuit is connected to the second interface unit, and configured for controlling the start and stop of supplying power to the heater.

The third interface unit is connected to the control circuit.

In some embodiments, the power supply assembly includes a fourth interface unit and a hybrid capacitor.

The fourth interface unit is disposed in couple with the third interface unit, so that the control assembly is connected to the power supply assembly.

The hybrid capacitor is connected to the fourth interface unit, and configured to supply power to the heater through the control assembly.

In some embodiments, one of the first interface unit and the second interface unit is provided with a first spring pin, the other of the second interface unit and the first interface unit is provided with a first spring pin interface, and the first spring pin is inserted into the first spring pin interface, so that the first interface unit is connected to the second interface unit.

One of the third interface unit and the fourth interface unit is provided with a second spring pin, the other of the fourth interface unit and the third interface unit is provided with a second spring pin interface, and the second spring pin is inserted into the second spring pin interface, so that the third interface unit is connected to the fourth interface unit.

In some embodiments, the control assembly further includes a first charging interface and a first charging circuit.

One end of the first charging circuit is connected to an external power supply through the first charging interface, and the other end of the first charging circuit is connected to the hybrid capacitor, so that the external power supply charges the hybrid capacitor through the first charging circuit.

In some embodiments, the power supply assembly further includes a second charging interface and a second charging circuit.

One end of the second charging circuit is connected to the external power supply through the second charging interface, and the other end of the second charging circuit is connected to the hybrid capacitor, so that the external power supply charges the hybrid capacitor through the second charging circuit.

In some embodiments, the external power supply includes a plurality of charging assemblies, a plurality of power supply assemblies are connected to the plurality of charging assemblies in a one-to-one correspondence manner, so that the external power supply charges a plurality of hybrid capacitors; and the plurality of charging assemblies include a plurality of charging piles or a plurality of charging cables.

In some embodiments, the control circuit determines an initial value of a parameter of the hybrid capacitor, and the external power supply charges the aerosol generating device, so that the value of the parameter of the hybrid capacitor reaches a preset value.

The initial value of the parameter includes any one of an initial voltage, an initial charge quantity, an initial capacity, and initial energy; and the value of the parameter includes any one of a charge quantity, a capacity, a charging time, and energy.

A second aspect of the present disclosure provides a split-type aerosol generating device. The split-type aerosol generating device includes a charging device and any of the above-mentioned aerosol generating devices. The charging device is connected to the aerosol generating device, and configured for charging the aerosol generating device.

In some embodiments, the charging device is a current source power supply device.

The effects of the present disclosure are as follows. Different from the related art, in the present disclosure, the heater assembly, the control assembly, and the power supply assembly that are detachably connected to each other form the aerosol generating device, which facilitates replacement of the heater assembly, the control assembly, or the power supply assembly. In response to a malfunction of any of the heater assembly, the control assembly, and the power supply assembly, a fault problem may be solved by only replacing a corresponding damaged assembly without replacing the whole device, which reduces the use cost.

It should be understood that the foregoing general description and the following detailed description are exemplary and explanatory only, and do not limit the present disclosure.

### BRIEF DESCRIPTION OF THE DRAWINGS

In order to more clearly illustrate the technical solutions in some embodiments of the present disclosure, hereinafter, a brief introduction will be given to the accompanying drawings that are used in the description of some embodiments. Obviously, the accompanying drawings in the description below are merely some embodiments of the present disclosure. For those of ordinary skill in the art, other accompanying drawings may be obtained based on these accompanying drawings without any creative efforts.
FIG. 1 is a structural schematic view of an aerosol generating device in an embodiment of the present disclosure.
FIG. 2 is a structural schematic view of a control assembly of FIG. 1 in an embodiment of the present disclosure.
FIG. 3 is a structural schematic view of the control assembly of FIG. 1 in another embodiment of the present disclosure.
FIG. 4 is a structural schematic view of a power supply assembly of FIG. 1 in an embodiment of the present disclosure.
FIG. 5 is a structural schematic view of the power supply assembly of FIG. 1 in another embodiment of the present disclosure.
FIG. 6 is a structural schematic view illustrating charging the power supply assembly in an embodiment of the present disclosure.
FIG. 7 is a structural schematic view of a split-type aerosol generating device in an embodiment of the present disclosure.
FIG. 8 is a structural schematic view of a charging device of FIG. 7 in an embodiment of the present disclosure.

### DETAILED DESCRIPTION

In order for those skilled in the art to better understand the technical solutions of the present disclosure, the aerosol generating device and the split-type aerosol generating device provided in the present disclosure may be further described in detail below with reference to the accompanying drawings and embodiments. It should be understood that the described embodiments are only a part of the embodiments of the present disclosure, and not all embodiments. Based on the embodiments in the present disclosure, all other embodiments obtained by those of ordinary skill in the art without creative effort are within the scope of the present disclosure.

The terms "first", "second", etc. in the present disclosure are configured to distinguish different objects, not to describe a specific order. In addition, the terms "include", "comprise", and "have", as well as any variations thereof, are intended to cover non-exclusive inclusions. For example, a process, a method, a system, a product, or a device that includes a series of operations or units is not limited to the listed operations or units, but optionally includes operations or units that are not listed, or optionally includes other operations or units that are inherent to these processes, methods, products, or devices.

As an emerging technology, an electronic atomization device replaces a traditional burning-type cigarette by heating e-liquid or low-temperature heating cigarette. An operating temperature of the electronic atomization device is low, and harmful components in the smoke generated by the electronic atomization device are far less than those of the traditional burning-type cigarette. The use of the electronic atomization device may greatly avoid the adverse effects of cigarettes on the human body, so that smoking by using the electronic atomization device becomes a healthier way of smoking.

The electronic atomization device includes two types of an electronic atomization smoking device and an aerosol generating device. The aerosol generating device heats a tobacco aerosol generating substrate to form the inhalable smoke by low-temperature heating without burning the tobacco aerosol generating substrate.

In the related art, most of low-temperature heating devices configured for generating aerosols have integrated structures, that is, a power supply used by the low-temperature heating device is irreplaceable. In response to service life of the power supply being attenuated or the power supply being damaged, the use of the low-temperature heating device is affected, and entire low-temperature heating device needs to be replaced, so that the use cost is relatively high.

The present disclosure provides an aerosol generating device to solve a problem that entire low-temperature heating device needs to be replaced due to a part being damaged, which makes the use cost higher.

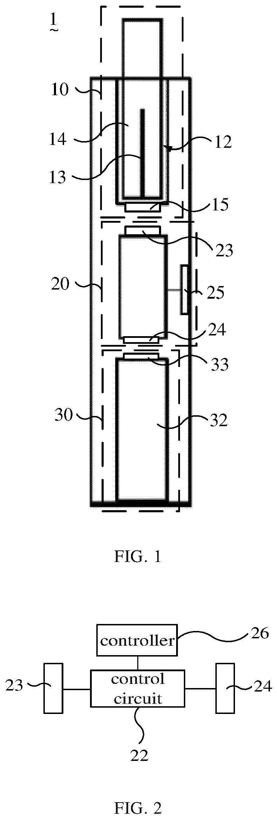

As illustrated in FIG. 1, FIG. 1 is a structural schematic view of an aerosol generating device in an embodiment of the present disclosure. As illustrated in FIG. 1, the aerosol generating device 1 includes a heater assembly 10, a control assembly 20, and a power supply assembly 30. The power supply assembly 30 is connected to the control assembly 20, to supply power to the heater assembly 10 through the control assembly 20.

The heater assembly 10 may be detachably connected to the control assembly 20, the control assembly 20 may be detachably connected to the power supply assembly 30, so as to replace the heater assembly 10, the control assembly 20, and/or the power supply assembly 30.

In some embodiments, the heater assembly 10 is configured to generate aerosol, and the heater assembly 10 includes a heater 13 and a first interface unit 15.

The heater assembly 10 defines an accommodating space 12, and the accommodating space 12 is configured for accommodating an aerosol substrate 14 and the heater 13.

The heater 13 is configured for heating the aerosol substrate 14 at a low-temperature to generate the aerosol. In the present embodiment, the heater assembly 10 may include one heater 13, one end of the heater 13 is disposed close to the aerosol substrate 14 to heat the aerosol substrate 14 at the low-temperature, and the other end of the heater 13 is connected to the control assembly 20.

In some embodiments, the heater assembly 10 may include a plurality of heaters 13, and the plurality of heaters 13 are connected in series or in parallel.

In some embodiments, in response to the plurality of heaters 13 being disposed in series, one end of each of the plurality of heaters 13 is disposed close to the aerosol substrate 14, and the other end of each of the plurality of heaters 13 is sequentially connected to the other end of an adjacent heater 13. The other end of the last heater 13 is connected to the control assembly 20. In response to the plurality of heaters 13 being disposed in parallel, one end of each of the plurality of heaters 13 is disposed close to the aerosol substrate 14, and the other end of each of the plurality of heaters 13 is connected to the control assembly 20.

The first interface unit 15 is configured for connecting the control assembly 20 to achieve connection between the heater assembly 10 and the control assembly 20. The control assembly 20 is connected to the heater assembly 10 and configured for controlling supplying power to the heater assembly 10.

As illustrated in FIG. 1 and FIG. 2, FIG. 2 is a structural schematic view of a control assembly of FIG. 1 in an embodiment of the present disclosure. As illustrated in FIG. 2, the control assembly 20 includes a control circuit 22, a second interface unit 23, a third interface unit 24, and a controller 26.

Two ends of the control circuit 22 are respectively connected to the second interface unit 23 and the third interface unit 24. The second interface unit 23 and the third interface unit 24 are respectively disposed on the two ends of the control assembly 20 close to the heater assembly 10 and the power supply assembly 30, to achieve the connection between the heater assembly 10 and the control assembly 20 and connection between the control assembly 20 and the power supply assembly 30.

In some embodiments, the second interface unit 23 is disposed in couple with the first interface unit 15, so that the control assembly 20 is connected to the heater assembly 10. In the present embodiment, one of the first interface unit 15 and the second interface unit 23 is provided with a first spring pin, the other of the second interface unit 23 and the first interface unit 15 is provided with a first spring pin interface, and the first spring pin is inserted into the first spring pin interface, so that the first interface unit 15 is connected to the second interface unit 23. In other embodiments, the first interface unit 15 may also be connected to the second interface unit 23 through other connection elements, and the present disclosure does not limit a connection mode between the first interface unit 15 and the second interface unit 23.

The control circuit 22 is configured to control the start and stop of supplying power to the heater 13. The two ends of the control circuit 22 are respectively connected to the second interface unit 23 and the third interface unit 24, and the third interface unit 24 is configured to connect the power supply assembly 30, thereby achieving connection of the heater assembly 10 and the power supply assembly 30.

The controller 26 is connected to the control circuit 22 and configured to control an operating state of the control circuit 22, thereby achieving controlling the start and stop of supplying power to the heater 13.

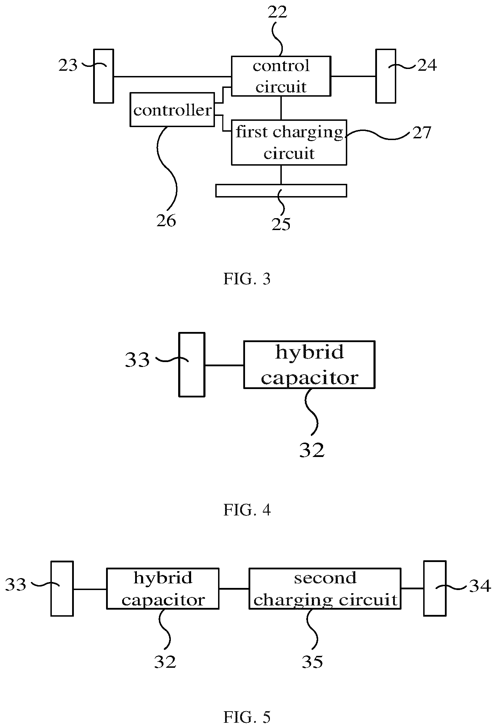

As illustrated FIGS. 1-3, FIG. 3 is a structural schematic view of the control assembly of FIG. 1 in another embodiment of the present disclosure. As illustrated in FIG. 3, on the basis of the above embodiments, the control assembly 20 further includes a first charging interface 25 and a first charging circuit 27. The first charging circuit 27 is disposed between the control circuit 22 and the first charging interface 25.

The first charging interface 25 is configured to connect an external power supply. One end of the first charging circuit 27 is connected to the external power supply through the first charging interface 25, and the other end of the first charging circuit 27 is connected to the power supply assembly 30 through the control circuit 22, so that the external power supply charges the power supply assembly 30 through the first charging circuit 27.

As illustrated in FIGS. 1-4, FIG. 4 is a structural schematic view of a power supply assembly of FIG. 1 in an embodiment of the present disclosure. As illustrated in FIG. 4, the power supply assembly 30 includes a hybrid capacitor 32 and a fourth interface unit 33.

The hybrid capacitor 32 is connected to the fourth interface unit 33, and the fourth interface unit 33 is disposed in couple with the third interface unit 24, so that the control assembly 20 is connected to the power supply assembly 30, and the hybrid capacitor 32 is configured to supply power to the heater 13 through the control assembly 20.

In the present embodiment, one of the third interface unit 24 and the fourth interface unit 33 is provided with a second spring pin, the other of the fourth interface unit 33 and the third interface unit 24 is provided with a second spring pin interface, and the second spring pin is inserted into the second spring pin interface, so that the third interface unit 24 is connected to the fourth interface unit 33. In some embodiments, the fourth interface unit 33 may also be connected to the third interface unit 24 through other connection elements, and the present disclosure does not limit the connection mode between the fourth interface unit 33 and the third interface unit 24.

As illustrated in FIGS. 1-5, FIG. 5 is a structural schematic view of the power supply assembly of FIG. 1 in another embodiment of the present disclosure. As illustrated in FIG. 5, the power supply assembly 30 further includes a second charging interface 34 and a second charging circuit 35.

The second charging circuit 35 is disposed between the hybrid capacitor 32 and the second charging interface 34, and two ends of the second charging circuit 35 are respectively connected to the hybrid capacitor 32 and the second charging interface 34. The fourth interface unit 33 is disposed on one end of the power supply assembly 30 close to the control assembly 20, and the second charging interface 34 is disposed on the other end of the power supply assembly 30 away from the control assembly 20. The second charging interface 34 is configured for connecting the external power supply, so that the external power supply is connected to the second charging circuit 35, thereby charging the hybrid capacitor 32 through the second charging circuit 35.

In some embodiments, in response to the hybrid capacitor 32 being charged by the external power supply, a constant current charging mode or a constant current-constant voltage charging mode may be used.

In some embodiments, in the constant current charging mode, the external power supply 2 outputs a constant charging current to the hybrid capacitor 32, until a voltage of the hybrid capacitor 32 reaches a preset value, at which time the charging is completed.

In the constant current-constant voltage charging mode, the external power supply 2 outputs the constant charging current to the hybrid capacitor 32, so that the voltage of the hybrid capacitor 32 reaches a first preset value; and the external power supply 2 performs constant voltage charging, and a charging current gradually decreases at this time. In response to the charging current dropping to zero, the hybrid capacitor 32 is fully charged, and the charging is completed.

In the present disclosure, the external power supply may charge the hybrid capacitor 32 through the first charging interface 25 or the second charging interface 34, and a specific charging mode is as follows.

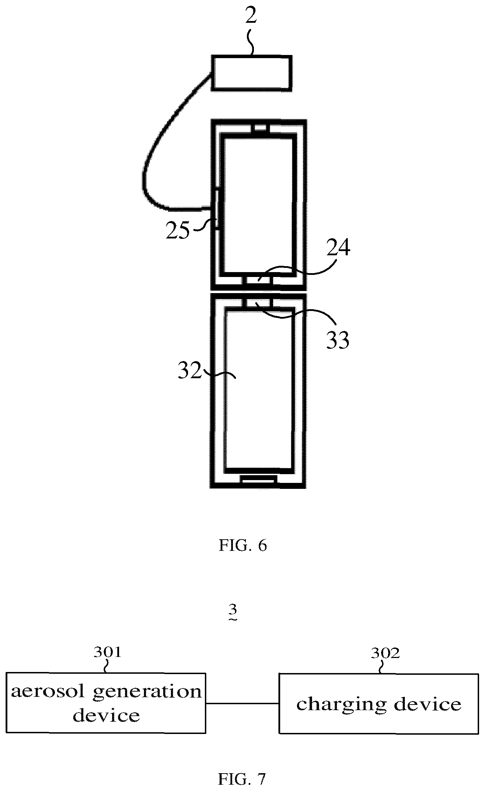

As illustrated in FIGS. 1-6, FIG. 6 is a structural schematic view illustrating charging the power supply assembly in an embodiment of the present disclosure. As illustrated in FIG. 6, an external power supply 2 is connected to the first charging interface 25, so that the external power supply 2 is connected to the control circuit 22 through the first charging circuit 27, and the control circuit 22 is connected to the hybrid capacitor 32 through the third interface unit 24 and the fourth interface unit 33.

The controller 26 controls an operation of the first charging circuit 27 through the control circuit 22, so that the first charging circuit 27 receives the charging current input by the external power supply 2, and the hybrid capacitor 32 receives the charging current through the control circuit 22, to achieve charging the hybrid capacitor 32.

In some embodiments, the external power supply 2 includes a plurality of charging assemblies. A plurality of power supply assemblies 30 are connected to the plurality of charging assemblies in a one-to-one correspondence manner, so that the external power supply 2 may simultaneously charge a plurality of hybrid capacitors 32, thereby shortening overall required charging time and improve charging efficiency.

In some embodiments, the external power supply 2 may include a charging base and a plurality of charging piles disposed on the charging base, and the plurality of charging piles are inserted into the second charging interface 34 of the power supply assembly 30, so that the external power supply 2 is connected to the second charging circuit 35 through the second charging interface 34, thereby charging the hybrid capacitor 32. In some embodiments, the plurality of charging piles may be other elements that may be disposed for coupling with the second charging interface 34.

In response to the plurality of power supply assemblies 30 being simultaneously inserted into the charging base, the external power supply 2 simultaneously charges the corresponding power supply assemblies 30 through the plurality of charging piles.

In some embodiments, the external power supply 2 may include a charging cable, and the charging cable is connected to the second charging interface 34, so that the external power supply 2 is connected to the second charging circuit 35 through the second charging interface 34, thereby charging the hybrid capacitor 32.

In some embodiments, the external power supply 2 may be connected to the plurality of power supply assemblies 30 through a plurality of charging cables, so as to simultaneously charge the plurality of power supply assemblies 30.

In some embodiments, the external power supply 2 is directly connected to the hybrid capacitor 32 through the second charging interface 34, the external power supply 2 is provided with a charging circuit, and the external power supply 2 charges the hybrid capacitor 32 through the charging circuit.

In some embodiments, in response to the aerosol generating device 1 being charged by the external power supply 2, operations are as follows.
(1) The controller 26 determines an initial value of a parameter of at least one hybrid capacitor 32.
(2) The external power supply 2 charges the at least one hybrid capacitor 32 through the control circuit 22, that is, the aerosol generating device 1 is charged.
(3) The controller 26 determines that the value of the parameter of the at least one hybrid capacitor 32 reaches a preset value, and the external power supply 2 stops charging.

The initial value of the parameter includes any one of an initial voltage, an initial charge quantity, an initial capacity, and initial energy. The value of the parameter includes any one of a charge quantity, a capacity, a charging time, and energy. A unit of the initial voltage is volt (V). A unit of the initial charge quantity is the same as that of the charge quantity, which is coulomb (C). A unit of the initial capacity is the same as that of the capacity, which is milliampere/hour (mA/h). A unit of the initial energy is the same as that of the energy, which is watt/hour (W/h). A unit of the charging time is watt/hour (W/h).

In some embodiments, after the controller 26 determines a total initial voltage of the at least one hybrid capacitor 32, the external power supply 2 charges the at least one hybrid capacitor 32 through the control circuit 22 until a total charge quantity of the at least one hybrid capacitor 32 reaches a preset value, and the external power supply 2 stops charging.

After the controller 26 determines the total initial voltage of the at least one hybrid capacitor 32, the external power supply 2 charges the at least one hybrid capacitor 32 through the control circuit 22 until a total capacity of the at least one hybrid capacitor 32 reaches the preset value, and the external power supply 2 stops charging.

After the controller 26 determines the total initial energy of the at least one hybrid capacitor 32, the external power supply 2 charges the at least one hybrid capacitor 32 through the control circuit 22 until a total charging time of the at least one hybrid capacitor 32 reaches the preset value, and the external power supply 2 stops charging.

After the controller 26 determines the total initial energy of the at least one hybrid capacitor 32, the external power supply 2 charges the at least one hybrid capacitor 32 through the control circuit 22 until the total energy of the at least one hybrid capacitor 32 reaches the preset value, and the external power supply 2 stops charging.

After the controller 26 determines the total initial energy of the at least one hybrid capacitor 32, the external power supply 2 charges the at least one hybrid capacitor 32 through the control circuit 22 until the total charge quantity of the at least one hybrid capacitor 32 reaches the preset value, and the external power supply 2 stops charging.

After the controller 26 determines the total initial energy of the at least one hybrid capacitor 32, the external power supply 2 charges the at least one hybrid capacitor 32 through the control circuit 22 until the total capacity of the at least one hybrid capacitor 32 reaches the preset value, and the external power supply 2 stops charging.

After the controller 26 determines the total initial charge quantity of the at least one hybrid capacitor 32, the external power supply 2 charges the at least one hybrid capacitor 32 through the control circuit 22 until the total charging time of the at least one hybrid capacitor 32 reaches the preset value, and the external power supply 2 stops charging.

After the controller 26 determines the total initial charge quantity of the at least one hybrid capacitor 32, the external power supply 2 charges the at least one hybrid capacitor 32 through the control circuit 22 until the total energy of the at least one hybrid capacitor 32 reaches the preset value, and the external power supply 2 stops charging.

After the controller 26 determines the total initial charge quantity of the at least one hybrid capacitor 32, the external power supply 2 charges the at least one hybrid capacitor 32 through the control circuit 22 until the total charge quantity of the at least one hybrid capacitor 32 reaches the preset value, and the external power supply 2 stops charging.

After the controller 26 determines the total initial charge quantity of the at least one hybrid capacitor 32, the external power supply 2 charges the at least one hybrid capacitor 32 through the control circuit 22 until the total capacity of the at least one hybrid capacitor 32 reaches the preset value, and the external power supply 2 stops charging.

After the controller 26 determines the total initial capacity of the at least one hybrid capacitor 32, the external power supply 2 charges the at least one hybrid capacitor 32 through the control circuit 22 until the total charging time of the at least one hybrid capacitor 32 reaches the preset value, and the external power supply 2 stops charging.

After the controller 26 determines the total initial capacity of the at least one hybrid capacitor 32, the external power supply 2 charges the at least one hybrid capacitor 32 through the control circuit 22 until the total energy of the at least one hybrid capacitor 32 reaches the preset value, and the external power supply 2 stops charging.

After the controller 26 determines the total initial capacity of the at least one hybrid capacitor 32, the external power supply 2 charges the at least one hybrid capacitor 32 through the control circuit 22 until the total charge quantity of the at least one hybrid capacitor 32 reaches the preset value, and the external power supply 2 stops charging.

After the controller 26 determines the total initial capacity of the at least one hybrid capacitor 32, the external power supply 2 charges the at least one hybrid capacitor 32 through the control circuit 22 until the total capacity of the at least one hybrid capacitor 32 reaches the preset value, and the external power supply 2 stops charging.

In some embodiments, the power supply assembly 30 may include a second controller, and the second controller confirms the initial value of the parameter and the value of the parameter of the at least one hybrid capacitor 32 as a whole.

In the present disclosure, the heater assembly 10, the control assembly 20, and the power supply assembly 30 that are detachably connected to each other form the aerosol generating device 1, which facilitates replacement of the heater assembly 10, the control assembly 20, or the power supply assembly 30. In response to a malfunction of any of the heater assembly 10, the control assembly 20, and the power supply assembly 30, a fault problem may be solved by only replacing a corresponding damaged assembly without replacing the whole device, which reduces the use cost.

The present disclosure further provides a split-type aerosol generating device, as illustrated in FIG. 7, FIG. 7 is a structural schematic view of a split-type aerosol generating device in an embodiment of the present disclosure. As illustrated in FIG. 7, the split-type aerosol generating device 3 includes an aerosol generating device 301 and a charging device 302. The aerosol generating device 301 is the aerosol generating device 1 disclosed in any of the above-mentioned embodiments, which may not be repeated here.

The charging device 302 is connected to the aerosol generating device 301, and configured for charging the hybrid capacitor 32 of the aerosol generating device 301. In the present embodiment, the charging device 302 is a current source power supply device.

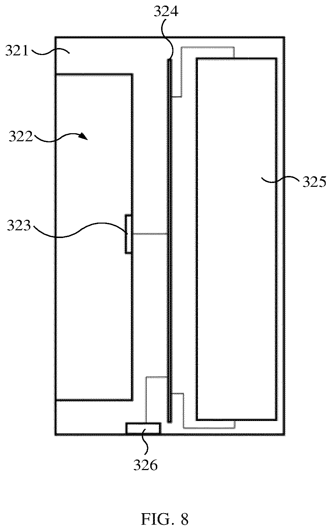

As illustrated in FIG. 7 and FIG. 8, FIG. 8 is a structural schematic view of a charging device of FIG. 7 in an embodiment of the present disclosure. As illustrated in FIG. 8, the charging device 302 includes a current source housing 321, a charging compartment 322, a discharging interface 323, a second control circuit 324, and a charging element 325.

One end of the current source housing 321 defines the charging compartment 322, and the discharging interface 323 is disposed in the charging compartment 322. The second control circuit 324 and the charging element 325 are disposed in the current source housing 321.

The charging compartment 322 is configured for accommodating the aerosol generating device 301. The charging compartment 322 defines an opening (not shown in the figures), so that the aerosol generating device 301 is disposed in the charging compartment 322 through the opening.

The discharging interface 323 is disposed on a side wall of the charging compartment 322 away from the opening. The discharging interface 323 is connected to the first charging interface 25 or the second charging interface 34, so that the aerosol generating device 301 is connected to the charging device 302.

The charging element 325 is configured to provide a charging voltage and configured for supplying power to the hybrid capacitor 32. In the present embodiment, the charging element 325 may be the hybrid capacitor or a rechargeable battery. In some embodiments, the rechargeable battery may be a lithium battery.

The second control circuit 324 is connected to the charging element 325 and the discharging interface 323, to control the charging element 325 to release the charging voltage to the hybrid capacitor 32 through the discharging interface 323.

The above description are only some embodiments of the present disclosure, and are not intended to limit the scope of the present disclosure. Any equivalent structure or equivalent flow transformation made by using the contents of the specification and accompanying drawings of the present disclosure, or directly or indirectly applied to other related technical fields, is included in the scope of the patent protection of the present disclosure.

## Claims

1. An aerosol generating device, **characterized by** comprising:
a heater assembly, configured for generating aerosol;
a control assembly, connected to the heater assembly, and configured for controlling supplying power to the heater assembly; and
a power supply assembly, connected to the control assembly, and configured for supplying power to the heater assembly through the control assembly;
wherein the heater assembly is detachably connected to the control assembly, and the control assembly is detachably connected to the power supply assembly, so as to facilitate replacement of the heater assembly, the control assembly, and/or the power supply assembly.

2. The aerosol generating device according to claim 1, wherein the heater assembly comprises:
a heater, configured for heating an aerosol substrate to generate the aerosol; and
a first interface unit, connected to the heater.

3. The aerosol generating device according to claim 2, wherein the heater assembly comprises a plurality of heaters, and the plurality of heaters are disposed in parallel or in series.

4. The aerosol generating device according to claim 2, wherein the control assembly comprises:
a second interface unit, disposed in couple with the first interface unit, so that the control assembly is connected to the heater assembly;
a control circuit, connected to the second interface unit, and configured for controlling the start and stop of supplying power to the heater; and
a third interface unit, connected to the control circuit.

5. The aerosol generating device according to claim 4, wherein the power supply assembly comprises:
a fourth interface unit, disposed in couple with the third interface unit, so that the control assembly is connected to the power supply assembly; and
a hybrid capacitor, connected to the fourth interface unit, and configured to supply power to the heater through the control assembly.

6. The aerosol generating device according to claim 5, wherein
one of the first interface unit and the second interface unit is provided with a first spring pin, the other of the second interface unit and the first interface unit is provided with a first spring pin interface, and the first spring pin is inserted into the first spring pin interface, so that the first interface unit is connected to the second interface unit; and/or
one of the third interface unit and the fourth interface unit is provided with a second spring pin, the other of the fourth interface unit and the third interface unit is provided with a second spring pin interface, and the second spring pin is inserted into the second spring pin interface, so that the third interface unit is connected to the fourth interface unit.

7. The aerosol generating device according to claim 5, wherein the control assembly further comprises:
a first charging interface; and
a first charging circuit, wherein one end of the first charging circuit is connected to an external power supply through the first charging interface, and the other end of the first charging circuit is connected to the hybrid capacitor, so that the external power supply charges the hybrid capacitor through the first charging circuit.

8. The aerosol generating device according to claim 5, wherein the power supply assembly further comprises:
a second charging interface; and
a second charging circuit, wherein one end of the second charging circuit is connected to an external power supply through the second charging interface, and the other end of the second charging circuit is connected to the hybrid capacitor, so that the external power supply charges the hybrid capacitor through the second charging circuit.

9. The aerosol generating device according to claim 8, wherein the external power supply comprises a plurality of charging assemblies; a plurality of power supply assemblies are connected to the plurality of charging assemblies in a one-to-one correspondence manner, so that the external power supply charges a plurality of hybrid capacitors; and the plurality of charging assemblies comprise a plurality of charging piles or a plurality of charging cables.

10. The aerosol generating device according to claim 7 or 8, wherein the control circuit determines an initial value of a parameter of the hybrid capacitor, and the external power supply charges the aerosol generating device, so that the value of the parameter reaches a preset value;
wherein the initial value of the parameter comprises any one of an initial voltage, an initial charge quantity, an initial capacity, and initial energy; and the value of the parameter comprises any one of a charge quantity, a capacity, a charging time, and energy.

11. A split-type aerosol generating device, characterized comprising:
the aerosol generating device according to any one of claims 1 to 10; and
a charging device, connected to the aerosol generating device, and configured for charging the aerosol generating device.

12. The split-type aerosol generating device according to claim 11, wherein the charging device is a current source power supply device.
